# EUROPEAN PATENT APPLICATION

(11) **EP 4 517 658 A1**
(43) Date of publication of application: **05.03.2025**
(21) Application number: 23194210.3
(22) Date of filing: 30.08.2023
(51) Int. Cl.: G06T 7/12, G06T 7/55, G06T 7/70, G06T 7/73, G06T 15/04, G06T 15/20, G06T 17/20, H04N 13/111, G06T 7/50

(54) **COMPUTER SYSTEM AND METHOD FOR 3D SCENE GENERATION**

(71) Applicant: Acer Incorporated, Taipei County 221 (TW)
(72) Inventor: CANTERO CLARES, Sergio, New Taipei City (TW); TAN, Chih-Haw, New Taipei City (TW); LIN, Hsi, New Taipei City (TW)
(74) Representative: 2K Patentanwälte Blasberg Kewitz & Reichel

(57) **Abstract**

A method for three-dimensional (3D) scene generation is provided. The method includes the step of creating a 3D mesh. The 3D mesh has a plurality of mesh vertices. The method further includes the step of receiving a raw image. The method further includes the step of estimating the depth information of the raw image. The method further includes the step of updating the 3D mesh based on the estimated depth information. The method further includes the step of projecting each of the mesh vertices of the 3D mesh onto a coordinate system of a 3D scene based on user position information. The method further includes the step of obtaining the 3D scene by coloring the 3D mesh projected onto the coordinate system based on the texture information that is associated with the raw image.

## Description

### BACKGROUND OF THE INVENTION

### Field of the Invention

The present disclosure relates in general to image processing techniques, and it relates in particular to three-dimensional (3D) scene generation.

### Description of the Related Art

Current methods for 3D scene generation typically utilize the principle of binocular parallax. That is, to make the right and left eyes see slightly different images, so that the brain interprets the parallax due to the different views from the eyes as depth perception.

However, such a 3D effect generated based on binocular parallax needs to be displayed on a display device that is specially designed for displaying 3D scenes, such an autostereoscopic display device or a wearable device (e.g., 3D/VR glasses or headgear). When no such 3D display devices are available, users are unable to view 3D scenes.

Therefore, it is desirable to have a solution for 3D scene generation that enables 3D perception on a popular display device for displaying 2D images.

### BRIEF SUMMARY OF THE INVENTION

An embodiment of the present disclosure provides a method for three-dimensional (3D) scene generation. The method is carried out by a computer device. The method includes the step of creating a 3D mesh. The 3D mesh has a plurality of mesh vertices. The method further includes the step of receiving a raw image. The method further includes the step of estimating the depth information of the raw image. The method further includes the step of updating the 3D mesh based on the estimated depth information. The method further includes the step of projecting each of the mesh vertices of the 3D mesh onto a coordinate system of a 3D scene based on user position information. The method further includes the step of obtaining the 3D scene by coloring the 3D mesh projected onto the coordinate system based on the texture information that is associated with the raw image.

In an embodiment, the method further includes the step of displaying the 3D scene on a display device. The display device is neither an autostereoscopic display device nor a wearable device.

In an embodiment, the method further includes the step of identifying an edge region of an object in the raw image using an image segmentation algorithm. The method further includes the step of reducing edge artifacts in the edge region of the object in the raw image to obtain a fine-tuned image. The method further includes the step of extracting the texture information from the fine-tuned image.

In an embodiment, the step of reducing edge artifacts in the edge region of the object in the raw image to obtain a fine-tuned image includes blurring the edge region of the object in the raw image using a blurring algorithm.

In an embodiment, the step of reducing edge artifacts in the edge region of the object in the raw image to obtain a fine-tuned image includes modifying a portion of the pixel values in the edge region based on a background region outside the object and adjacent to the edge region.

In an embodiment, the step of reducing edge artifacts in the edge region of the object in the raw image to obtain a fine-tuned image includes determining a plurality of layers of the raw image according to the depth information, and enlarging the layer that corresponds to the depth value that is lower than the threshold.

In an embodiment, the method further includes the step of using a camera device to capture a user image. The method further includes the step of calculating the user position information based on the user image using a face-tracking algorithm or an eye-tracking algorithm.

In an embodiment, the step of obtaining the 3D scene by coloring the 3D mesh projected onto the coordinate system based on the texture information of the raw image includes interpolating color textures of the raw image on the 3D mesh projected onto the coordinate system of the 3D scene.

In an embodiment, the step of creating the 3D mesh includes creating a texture of a triangle formed by three of the mesh vertices that are adjacent to one another.

An embodiment of the present disclosure provides a computer system for three-dimensional (3D) scene generation. The computer system includes a storage device and a processing unit. The processing unit loads a program from the storage device to execute the steps of the method described above.

The method and the computer device of the present disclosure provides a novel technique to generate scenes with 3D effects that can be displayed on a popular display device for displaying 2D images without the need of an autostereoscopic display device or a wearable device. Since there is no need to draw the scene twice for the two eyes, and there is no need to perform the interlacing (or weaving) process for autostereoscopic display, the computing resource can be greatly saved. Furthermore, potential risks of vergence accommodation conflict (VAC) caused by binocular parallax can be avoided.

### BRIEF DESCRIPTION OF THE DRAWINGS

The present disclosure can be more fully understood by reading the subsequent detailed description and examples with references made to the accompanying drawings, wherein:
FIG. 1 illustrates the conceptual flow of an exemplary conventional approach for 3D scene generation.
FIG. 2 is the flow diagram of the method for 3D scene generation, according to an embodiment of the present disclosure.
FIG. 3 is the schematic block diagram of the computer system for 3D scene generation, according to an embodiment of the present disclosure.

### DETAILED DESCRIPTION OF THE INVENTION

The following description is made for the purpose of illustrating the general principles of the invention and should not be taken in a limiting sense. The scope of the invention is best determined by reference to the appended claims.

In each of the following embodiments, the same reference numbers represent identical or similar elements or components.

It must be understood that the terms "including" and "comprising" are used in the specification to indicate the existence of specific technical features, numerical values, method steps, process operations, elements and/or components, but do not exclude additional technical features, numerical values, method steps, process operations, elements, components, or any combination of the above.

Ordinal terms used in the claims, such as "first," "second," "third," etc., are only for convenience of explanation, and do not imply any precedence relation between one another.

The description for the embodiments the method is also applicable to the embodiments of the computer system, and vice versa.

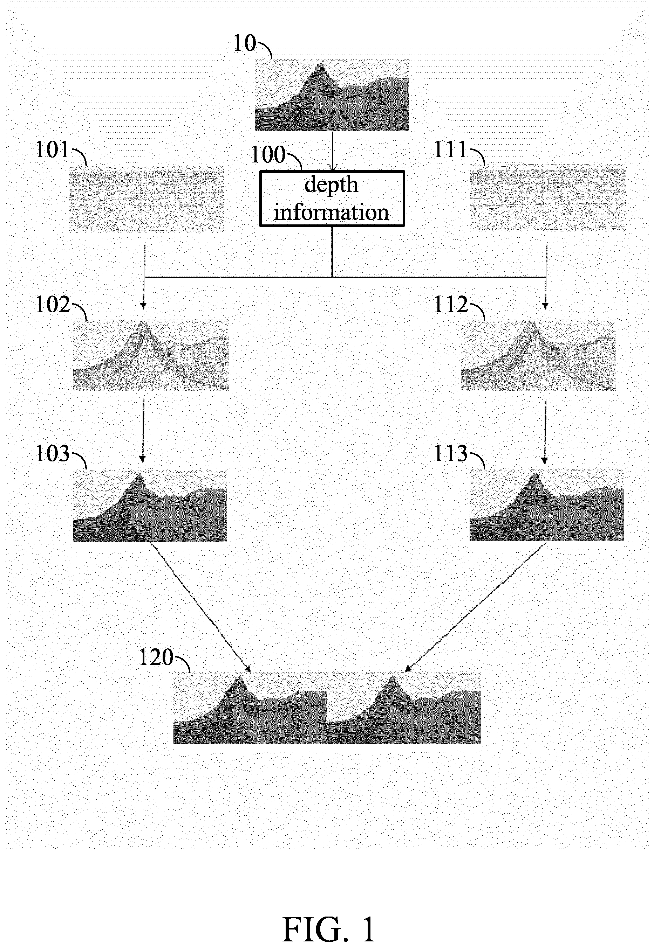

FIG. 1 illustrates the conceptual flow of an exemplary conventional approach for 3D scene generation. In the illustrated example, a mesh model is used for defining the shape and the depth of the object (e.g., the mountain) in the image.

As shown in FIG. 1, the mesh 101 is created including a plurality of triangles (can be replaced with other types of polygons) arranged in sequence on the X-Y plane, and each triangle has a set of vertices. The mesh 101 will be updated to the updated mesh 102 by giving the vertices of each triangle in the mesh 101 a specific height (i.e., the scale along the Z-axis direction) which is determined by the depth information 100 captured from the raw image 10 and stored in the depth buffer (also known as the "z-buffer"). Then, the left eye image 103 (i.e., the view for the left eye of humans) is generated by coloring the triangles in the updated mesh 102. Likewise, the mesh 111 is created including a plurality of triangles (can be replaced with other types of polygons) arranged in sequence on the X-Y plane, and each triangle has a set of vertices. The mesh 111 will be updated to the updated mesh 112 by giving the vertices of each triangle in the mesh 111 a specific height (i.e., the scale along the Z-axis direction) which is determined by the depth information 100 captured from the raw image 10 and stored in the depth buffer. Then, the right eye image 113 (i.e., the view for the right eye of humans) is generated by coloring the triangles in the updated mesh 112 based on the color texture (e.g., the RGB value of each pixel) of the raw image 10. The left eye image 103 and the right eye image 113 appear to be the same but actually have slight differences. Finally, the left eye image 103 and the right eye image 113 can be aligned side by side to form a side-by-side 3D image 120. The left part of the side-by-side 3D image 120 is from the left eye image 103, while the right part of the side-by-side 3D image 120 is from the right eye image 113.

To present 3D effects to the user, a display device specially designed for displaying 3D scenes, such an autostereoscopic display device or a wearable device (e.g., 3D/VR glasses or headgear), is required. In case that the display device is a wearable device such as 3D/VR glasses or headgear, the left eye image 103 and the right eye image 113 will be displayed on the left display panel and the right display panel of the wearable device, respectively. In case that the display device is an autostereoscopic display device, the side-by-side 3D image 120 will further go through an interlacing (or weaving) process based on properties of the autostereoscopic display device, such as the parameters associated with the parallax barrier or the lenticular lenses of the autostereoscopic display device. After the interlaced (or weaved) image passes through the parallax barrier or the lenticular lenses of the autostereoscopic display device, the user will see a different view on each eye, and thus perceive the 3D effect by virtue of binocular parallax.

The embodiments of the present disclosure utilize the principle of motion parallax instead of the binocular parallax utilized by the prior arts. Generally, in the embodiments of the present disclosure, the scenes are generated based on user's position relative to the screen of the display device. As the user moves, changing his/her position relative to the screen, the scene generated and presented on the display device will be different. Thus, the 3D effect is achieved without the need of the autostereoscopic display device or a wearable device.

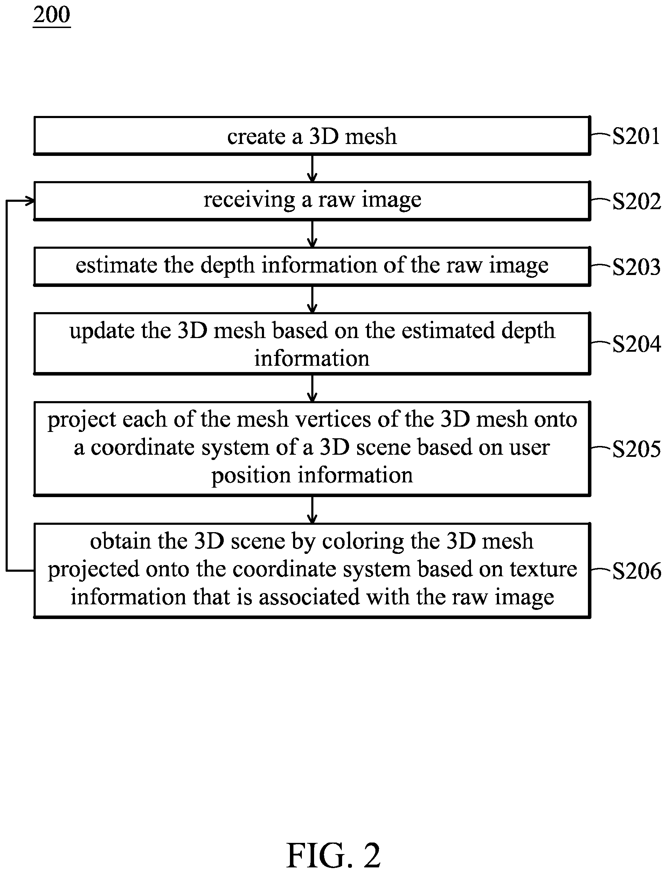

FIG. 2 is the flow diagram of the method 200 for 3D scene generation, according to an embodiment of the present disclosure. As shown in FIG. 2, the method 200 includes steps S201-S206.

In step S201, a 3D mesh is created. The created 3D mesh has a plurality of mesh vertices. Then, the method proceeds to step S202.

In step S202, a raw image is received. Then, the method 200 proceeds to step S203.

In step S203, the depth information of the raw image is estimated. Then, the method 200 proceeds to step S204.

In step S204, the 3D mesh is updated based on the estimated depth information. Then, the method 200 proceeds to step S205.

In step S205, each of the mesh vertices of the 3D mesh is projected onto a coordinate system of a 3D scene based on user position information. Then, the method 200 proceeds to step S206.

In step S206, the 3D scene is obtained by coloring the 3D mesh projected onto the coordinate system based on the texture information that is associated with the raw image.

In an embodiment, step 201 includes the operation of creating the texture of a triangle formed by three of the mesh vertices that are adjacent to one another. For example, the mesh may include a plurality of vertices and a plurality of triangles. Each of the triangles is formed by three of the mesh vertices that are adjacent to one another, and has a corresponding texture. When the mesh being created, the texture of each of the triangles, as a type of data structure, will also be created (or initialized).

In an embodiment, the raw image may originate from an application program, such as a game, a video / multimedia player program, a web browser, a photo viewing program, or any other visual entertainment application. More specifically, the raw image can be the image that the application program requests the bottom layer hardware (e.g., GPU) to render.

In an embodiment, the depth information can be represented in the form of a depth map, a parallax map, or a point cloud, but the present disclosure is not limited thereto. The depth information can be estimated using a convolution neural network (CNN)-based model in step S203, but the present disclosure is not limited thereto.

In an embodiment, image of user (referred to as "user image") is captured using a camera device, and the user position information used in step S204 can be calculated based on the user image using a face-tracking algorithm or an eye-tracking algorithm. The user position information may refer to the position of user (or user's face, user's eyes, etc.) relative to the screen of the display device, which can be represented by coordinates.

In an embodiment, step S205 can use a variety of well-established 3D projection techniques to map the vertices of the mesh onto the coordinate system. These techniques includes orthographic projection, perspective projection, oblique projections, and axonometric projection, etc., but the present disclosure is not limited thereto. To elaborate further, the user positional information is used as parameters for functions associated with said 3D projection techniques. These functions are used to construct a transformation matrix, a pivotal component of the process. This transformation matrix takes the individual mesh vertices as input and generates their corresponding positions within the coordinate system. In an exemplary implementation, during step S205, two 3D projection options are made available: orthographic projection and perspective projection. The former is a simplified version of the latter, exclusively considering the user's viewing angle while disregarding the distance from the screen. On the other hand, perspective projection takes into account both the user's viewing angle and their distance from the screen. These projection options can be governed by parameters such as "perspective amount," "virtual camera distance," "z-distance," or similar concepts. For instance, perspective projection is used when the value of the "perspective amount" is non-zero, whereas orthographic projection is used the value of the "perspective amount" is zero.

In an embodiment, step S206 may further include the operation of interpolating color textures of the raw image on the 3D mesh projected onto the coordinate system of the 3D scene. The color textures can be represented in a variety of formats of the color space, such as RGB, YUV, YCbCr, CMYK, sRGB, HSV, etc., but the present disclosure is not limited thereto.

In an embodiment, the generated 3D scenes can be displayed on a display device which is neither an autostereoscopic display device nor a wearable device (e.g., 3D/VR glasses or headgear), but on a popular display device for displaying 2D images.

In some embodiments, the texture information used in step S206 is extracted from a fine-tuned image. The fine-tuned image can be obtained by reducing edge artifacts in the edge region of the object in the raw image. The edge region of the object in the raw image can be identified using an image segmentation algorithm. The image segmentation algorithm may include any algorithm used for boundary tracing, such as the square tracing algorithm, the Moore-neighbor tracing algorithm, the radial sweep algorithm, Theo Pavlidis' algorithm, etc., but the present disclosure is not limited thereto. In an embodiment, the image segmentation algorithm may be implemented using a well-established machine learning model, such as U-Net, DeepLab, Mask R-CNN, HRNet, Enet., etc., but the present disclosure is not limited thereto.

There are numerous approaches to reducing edge artifacts in an edge region. The first approach provided herein is to blur the edge region of the object in the raw image using a blurring algorithm. The blurring algorithm can be, for example, a box blurring method, a Gaussian blurring method, and a differential privacy-based pixilation method, etc., but the present disclosure is not limited thereto. Using the first approach, the edge region of the object becomes less pronounced, allowing a stronger depth effect to be applied. The second approach provided herein is to modify a portion of the pixel values in the edge region based on the background region outside the object and adj acent to the edge region. Using the second approach, a portion of the edge region can be filled with reference to the content of the background, smoothing the edge region of the object. The third approach provided herein is to determine a plurality of layers of the raw image according to the depth information, wherein each of the layers corresponds to a depth value, and then to enlarge the layer that corresponds to the depth value that is lower than the threshold. The degree of enlargement can be determined by the depth value. Using the third approach, any layer that corresponds to a smaller depth value can be enlarged more, therefore reducing the size of edge artifact.

In an embodiment, at least one of the three approaches (i.e., the first approach, the second approach, and the third approach described above) is adopted to reduce edge artifacts in the edge region of the object in the raw image.

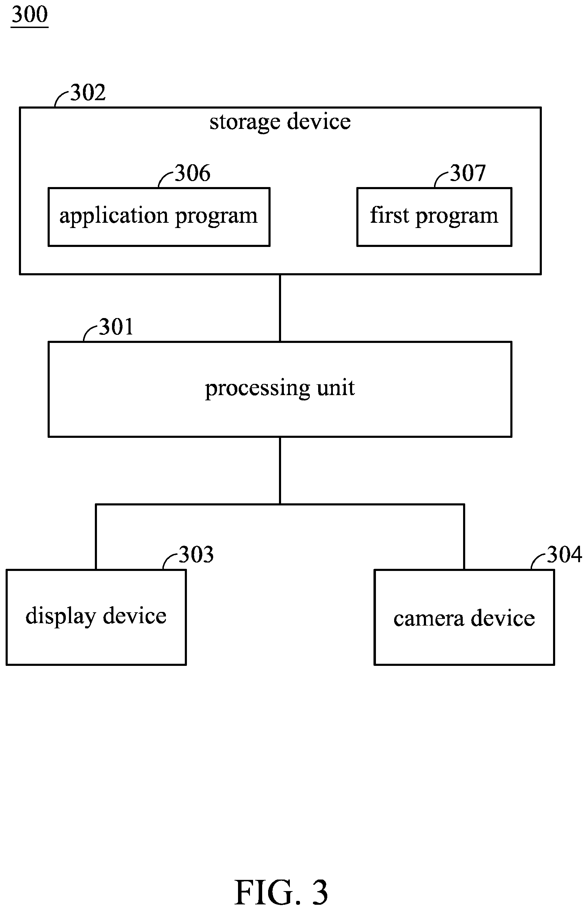

The method 200 can be carried out by a computer system, the structure of which will be described with reference to FIG. 3.

FIG. 3 is the schematic block diagram of the computer system 300 for 3D scene generation, according to an embodiment of the present disclosure. As shown in FIG. 3, elements such as the processing unit 301, the storage device 302, the display device 303, and the camera device 304 are included in the computer system 300.

The computer system 300 is an electronic device capable of the execution of computational tasks, such as a personal computer (including desktop computer, laptop computer, tablet computer, etc.), or a server computer.

The processing unit 301 may include any device/element used for executing instructions, such as a central processing unit (CPU), a graphics processing unit (GPU), a microprocessor, a microcontroller, a state machine, an application-specific integrated circuit (ASIC), a system-on-chip (SoC), and/or the like, but the present disclosure is not limited thereto.

The storage device 302 is a non-volatile memory device, such as a hard disk drive, a solid-state disk, a flash memory, or a read-only memory, but the present disclosure is not limited thereto. According to the embodiments of the present disclosure, the storage device 302 is used for storing the application program 306 and the first program 307. The application program 306 may be any software program providing visualized images or scenes to viewers, such as a game, a video / multimedia player program, a photo viewing program, or another visual entertainment application. The first program 307 includes multiple instructions such that the processing unit 301 executes the steps of the method 200 when loading the first program 307 from the storage device 302.

The display device 303 is used for displaying the generated 3D scenes. According to the embodiments of the present disclosure, the display device 303 can be neither an autostereoscopic display device nor a wearable device (e.g., 3D/VR glasses or headgear), but a popular display device for displaying 2D images.

The camera device 304 may be any device used for photographing. The ways of photographing may include normal optical photographing or infrared photographing. The present disclosure is not limited to the types of the camera device 304 or the ways of photographing. According to an embodiment of the present disclosure, the camera device 303 is used for capturing the user image, which is required for calculating the user position information.

The method and the computer device of the present disclosure provides a novel technique to generate scenes with 3D effects that can be displayed on a popular display device for displaying 2D images without the need of an autostereoscopic display device or a wearable device. Since there is no need to draw the scene twice for the two eyes, and there is no need to perform the interlacing (or weaving) process for autostereoscopic display, the computing resource can be greatly saved. Furthermore, potential risks of vergence accommodation conflict (VAC) caused by binocular parallax can be avoided.

The above paragraphs are described with multiple aspects. Obviously, the teachings of the specification may be performed in multiple ways. Any specific structure or function disclosed in examples is only a representative situation. According to the teachings of the specification, it should be noted by those skilled in the art that any aspect disclosed may be performed individually, or that more than two aspects could be combined and performed.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for three-dimensional (3D) scene generation, carried out by a computer device, the method comprising the following steps:
creating a 3D mesh, wherein the 3D mesh has a plurality of mesh vertices;
receiving a raw image;
estimating depth information of the raw image;
updating the 3D mesh based on the estimated depth information;
projecting each of the mesh vertices of the 3D mesh onto a coordinate system of a 3D scene based on user position information; and
obtaining the 3D scene by coloring the 3D mesh projected onto the coordinate system based on texture information that is associated with the raw image.

2. The method as claimed in claim 1, further comprising:
identifying an edge region of an object in the raw image using an image segmentation algorithm;
reducing edge artifacts in the edge region of the object in the raw image to obtain a fine-tuned image; and
extracting the texture information from the fine-tuned image.

3. The method as claimed in claim 2, wherein the step of reducing edge artifacts in the edge region of the object in the raw image to obtain a fine-tuned image comprises:
blurring the edge region of the object in the raw image using a blurring algorithm.

4. The method as claimed in claim 2 or 3, wherein the step of reducing edge artifacts in the edge region of the object in the raw image to obtain a fine-tuned image comprises:
modifying a portion of pixel values in the edge region based on a background region outside the object and adjacent to the edge region.

5. The method as claimed in any of claims 2 to 4, wherein the step of reducing edge artifacts in the edge region of the object in the raw image to obtain a fine-tuned image comprises:
determining a plurality of layers of the raw image according to the depth information, wherein each of the layers corresponds to a depth value; and
enlarging the layer that correspond to the depth value lower than a threshold.

6. The method as claimed in any of claims 1 to 5, wherein the step of obtaining the 3D scene by coloring the 3D mesh projected onto the coordinate system based on the texture information of the raw image comprises:
interpolating color textures of the raw image on the 3D mesh projected onto the coordinate system of the 3D scene.

7. The method as claimed in any of claims 1 to 6, wherein the step of creating the 3D mesh comprises:
creating a texture of a triangle formed by three of the mesh vertices that are adjacent to one another.

8. The method as claimed in any of claims 1 to 7, further comprising:
displaying the 3D scene on a display device (303), wherein the display device (303) is neither an autostereoscopic display device nor a wearable device.

9. The method as claimed in any of claims 1 to 8, further comprising;
using a camera device (304) to capture a user image;
calculating the user position information based on the user image using a face-tracking algorithm or an eye-tracking algorithm.

10. A computer system (300) for three-dimensional (3D) scene generation, comprising a storage device (302) and a processing unit (301), wherein the processing unit (301) loads a program from the storage device (302) to execute the method as claimed in any of claims 1 to 7.

11. The computer system as claimed in claim 10, further comprising:
a display device (303), for displaying the 3D scene;
wherein the display device (303) is neither an autostereoscopic display device nor a wearable device.

12. The computer system as claimed in claim 10 or 11, further comprising:
a camera device (304), for capturing a user image;
wherein the processing unit (301) further calculates the user position information based on the user image using a face-tracking algorithm or an eye-tracking algorithm.
